# EUROPEAN PATENT SPECIFICATION

(11) **EP 2 644 422 B1**
(45) Date of publication and mention of the grant of the patent: **15.10.2014**
(21) Application number: 12161182.6
(22) Date of filing: 26.03.2012
(51) Int. Cl.: B60J 7/02, B60J 7/047

(54) **Open roof construction for a vehicle**
Offene Dachkonstruktion für ein Fahrzeug
Construction décapotable pour véhicule

(43) Date of publication of application: 02.10.2013
(73) Proprietor: Inalfa Roof Systems Group B.V., 5804 AB Venray (NL)
(72) Inventor: Nellen, Marcel Johan Christiaan, 5815 AR Merselo (NL); Vervoort, Stephan Christiaan, 5831 LD Boxmeer (NL); Pop, Emile Frans, 2513 TE Den Haag (NL); De Boer, Justin, 1076 CW Amsterdam (NL)
(74) Representative: De Vries & Metman

(56) References cited:
- EP-A1- 1 454 783
- FR-A1- 2 808 482
- GB-A- 923 270

## Description

The invention relates to an open roof construction for a vehicle, comprising a number of separate roof panels which are movable between a closed position for closing a roof opening of said vehicle and an opened position for at least partially freeing said roof opening.

Such a construction is known from EP1454783 A.

It is an object of the present invention to provide an improved open roof construction of the above type.

Thus, in accordance with the present invention the open roof construction is characterized in that a telescoping mechanism is provided for moving said number of roof panels, substantially in a longitudinal direction of the vehicle, between the closed and opened positions, which telescoping mechanism is provided with a number of telescoping members which in a telescoping manner are movable relative to each other and wherein each panel is attached to and moved by a different one of said telescoping members.

The use of such a telescoping mechanism, among others, offers the advantage that in the opened position of the roof panels a roof opening is obtained which, to a large amount, is free of obstacles and which, therefore, may be maximised (in correspondence with the constant demand for increasingly larger, unobstructed, roof openings in vehicles).

It is noted, that the invention also relates to a case in which only one roof panel is present. In such a case, generally the telescoping mechanism comprises two telescoping members, of which one is attached to the roof panel and the other is attached to a stationary part of the vehicle (e.g. the vehicle body).

In one embodiment, the open roof construction according to the present invention is provided with a single telescoping mechanism located substantially along a longitudinal centre line of said roof panels. Such an embodiment, for example, may be used when the dimensions (and, thus, weight) of the roof panels are moderate and sufficient stability may be obtained by just a single, central, telescoping mechanism.

However, under certain circumstances (for example, when the dimensions, and thus weight, of the roof panels are more substantial) the open roof construction may be provided with two telescoping mechanisms located substantially at the opposite longitudinal edges of said roof panels.

In one embodiment of the open roof construction according to present invention each telescoping mechanism moves in a fixed direction. Said fixed direction will be determined by the relative (translating) telescoping movement of the telescoping members of the telescoping mechanism.

In an alternative embodiment however, which for example may be used in an open roof construction of which the roof panels have to describe a more complex (at least partially curved) track when moving between the closed and opened positions, each telescoping mechanism may move in a variable direction.

For example, it is possible that each telescoping mechanism is mounted for a rotation about an axis of rotation extending substantially in a transverse direction. As a result the direction of the telescoping movement of the telescoping mechanism may be varied (at any desired stage of the movement, for example before or during said movement).

In one embodiment, then, the telescoping mechanism is devised for carrying out its telescoping movement and its rotation about said axis of rotation substantially successively. That means that one of said movements (telescoping movement or rotation) substantially will be completed before the other one of said movements is carried out. For example, when moving the roof panels from the closed to the fully opened position initially a translating telescoping movement may be carried out, followed by a rotation of the telescoping mechanism.

Alternatively, the telescoping mechanism may be devised for carrying out its telescoping movement and its rotation about said axis of rotation at least partly simultaneously. This means that a translating telescoping movement and said rotation at least partly are carried out at the same time.

In yet another embodiment of the open roof construction according to the present invention, each telescoping mechanism is attached to the vehicle at a position behind the roof opening, as seen in the longitudinal direction of said vehicle, such that the panels, when moved to the fully opened position, are located substantially behind said roof opening. As a result the free roof opening, in the fully opened position of the roof panels, may be maximised.

The open roof construction according to the present invention may be applied to a vehicle of the type having a rear trunk, in which case the telescoping mechanism may be devised for, in their fully opened position, positioning the panels in said trunk. It is noted, that especially in such a case the embodiment is favourable in which each telescoping mechanism can move in a variable direction (and, for example, may rotate around a transverse axis of rotation).

In one embodiment of the open roof construction, the roof opening is of the type comprising two opposite longitudinal edges which are defined by cant rails which are devised for maintaining their position along said longitudinal edges when the panels move between the closed and opened positions. This means, that said cant rails will maintain their original position at opposite longitudinal edges of the roof opening (connecting a forward body part -e.g. the so called A-beam-of the vehicle with a rearward body part -e.g. the so called C-beam- when the roof panels are moved to an opened position and, thus, add to the overall constructional stability of the vehicle).

However, as an alternative, it is possible that the construction comprises two cant rails attached to longitudinal side edges of the panels and moving along with the panels when these move between the closed and opened positions. Such an embodiment allows to offer the vehicle the appearance of a convertible when the roof panels have moved to the opened position.

In such a case, each cant rail may comprise a number of cant rail members attached to longitudinal side edges of respective ones of the roof panels, which cant rail members are provided with cooperating connecting members for establishing a connection between successive cant rail members in the closed position of the roof panels. In the closed position of the roof panels the connecting members ensure that the cant rail members define rigid cant rails. When the roof panels have to be moved to the opened position, the connecting members will be disconnected from each other.

Although it is conceivable that each roof panel is attached to a respective telescoping member in a rigid manner, in one embodiment of the open roof construction according to the present invention the roof panels are attached to the respective telescoping members in a manner to allow a change of the relative position between a roof panel and the corresponding telescoping member. This allows to achieve more complicated movements of the roof panels (for example to take into account space limitations).

For example it is conceivable, that each roof panel is attached to a respective telescoping member through an axis of rotation extending substantially in a transverse direction. The rotation of a roof panel around such axis may be synchronised with the movement of the telescoping mechanism.

It is noted, that the telescoping mechanism may be rectilinear or curved. The resulting translating movement then also will be according to a straight or curved line, respectively.

Hereinafter the invention will be elucidated while referring to the drawings in which a number of exemplary embodiments of the open roof construction according the present invention are illustrated. In the drawings:
Figure 1 shows, in perspective and schematically, a first embodiment of the open roof construction according to the present invention, in a closed position, an intermediate position and an opened position;
Figure 2 shows, in perspective and schematically, a second embodiment of the open roof construction according to the present invention, in a closed position, an intermediate position and an opened position;
Figure 3 shows, in perspective and schematically, a third embodiment of the open roof construction according to the present invention, in a closed position and in an opened position;
Figure 4 shows, in perspective and schematically, a fourth embodiment of the open roof construction according to the present invention, in a closed position and in an opened position;
Figure 5 shows, in a side elevational view and schematically, a fifth embodiment of the open roof construction according to the present invention, in a closed position, an intermediate position and in an opened position; and
Figure 6 shows, similar to figure 1b, a sixth embodiment of the open roof construction according to the present invention.

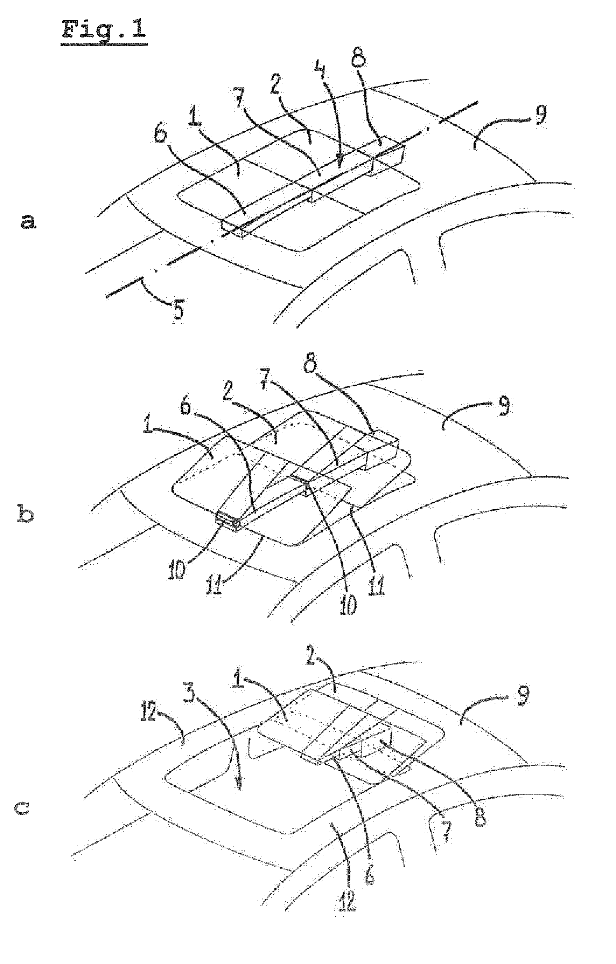

Firstly referring to figure 1, a first embodiment of a roof construction for a vehicle is illustrated, comprising two separate roof panels 1,2 which are movable between a closed position (figure 1a) for closing a roof opening 3 of said vehicle and an opened position (figure 1c) for at least partially freeing said roof opening.

A telescoping mechanism 4 is provided for moving said roof panels 1,2, substantially in a longitudinal direction 5 of the vehicle, between the closed and opened positions. The telescoping mechanism 4 is provided with a number of telescoping members 6-8 which in a telescoping manner are movable relative to each other. A first panel 1 is attached to and moved by telescoping member 6, whereas a second panel 2 is attached to and moved by telescoping member 7. In the illustrated embodiment telescoping member 8 is attached to a stationary roof part 9 at a position behind the roof opening 3, as seen in the longitudinal direction of said vehicle, such that the panels 1,2, when moved to the fully opened position, are located substantially behind said roof opening 3.

As appears clearly from figure 1, the open roof construction is provided with a single telescoping mechanism 4 located substantially along a longitudinal centre line of said roof panels 1,2. The telescoping mechanism 4 moves in a fixed direction according to a translational movement, and thus its telescoping member 8 may be attached to the stationary roof part 9 in a fixed manner.

The roof panels 1,2 are attached to the respective telescoping members 6,7 in a manner to allow a change of the relative position between a roof panel and the corresponding telescoping member. For example, each roof panel 1,2 may be attached to the respective telescoping member 6,7 through an axis of rotation 10 (illustrated schematically in figure 1b only) extending substantially in a transverse direction (and in the illustrated embodiment in the immediate vicinity of a leading edge 11 of the respective roof panel).

In the embodiment of figure 1 the rotation of the panels 1,2 around the respective axis 10 and the telescoping (translating) movement of the telescoping mechanism 4 are synchronised in such a manner that firstly a rotation of the panels 1,2 occurs (from figure 1a to figure 1b) and next a translation (from figure 1b to figure 1c). It is conceivable, however, that such movements occur at least partly simultaneously and/or in a different order.

Finally figure 1c shows that the roof opening 3 comprises two opposite longitudinal edges which are defined by cant rails 12 which are devised for maintaining their position along said longitudinal edges when the panels 1,2 move between the closed and opened positions.

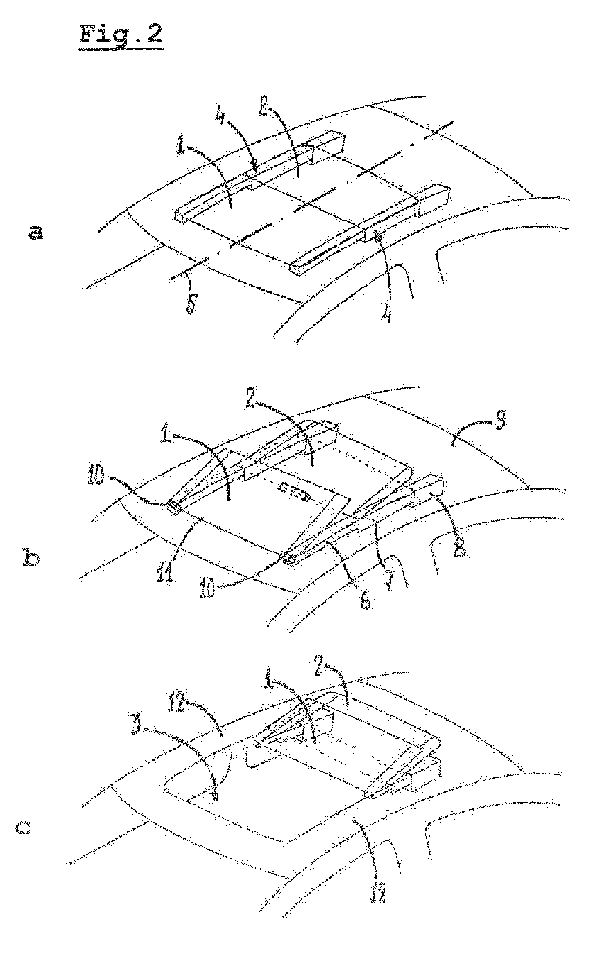

Figure 2 shows (again in three successive positions) a second embodiment of the open roof construction according to the present invention which closely resembles the embodiment according to figure 1 and in which like parts are indicated by like reference numbers. The only difference with the previous embodiment is that this second embodiment comprises two telescoping mechanisms 4 located substantially at the opposite longitudinal edges of the roof panels 1,2. The operation of this embodiment is similar to that of figure 1 and will not be repeated here.

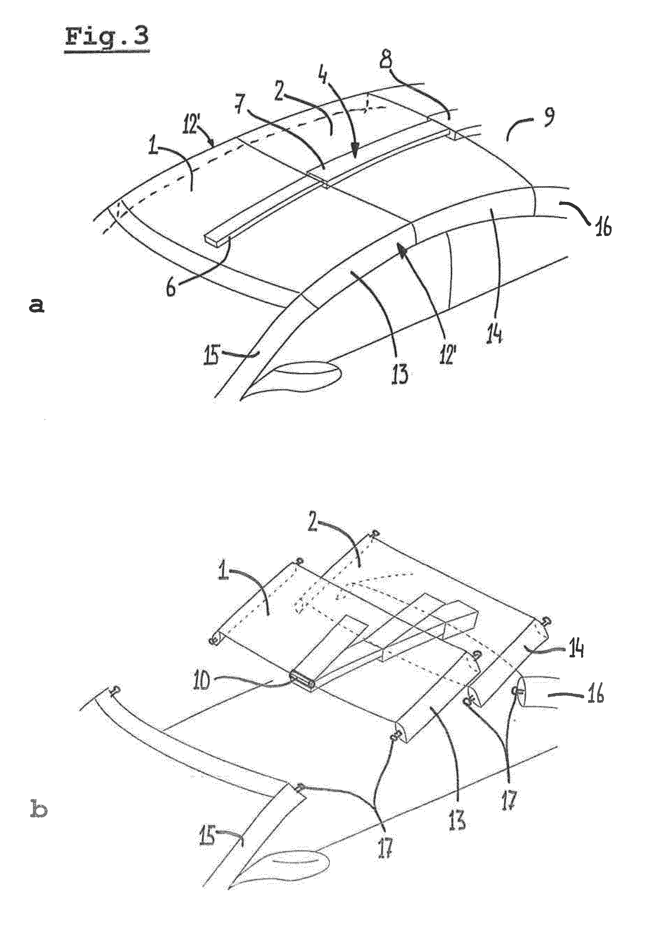

The third embodiment shown in figure 3 comprises a number of parts similar to figure 1 and thus provided with like reference numbers. In this case, however, the cant rails 12' are devised for moving along with the panels 1,2 when these move between the closed and opened positions. Each cant rail 12' comprises a number of cant rail members 13,14 attached to longitudinal side edges of respective ones of the roof panels 1,2 (and stationary cant rail members 15,16 making part of the body of the vehicle). The cant rail members 13-16 are provided with cooperating connecting members 17 (indicated only schematically in figure 3b) for establishing a connection between successive cant rail members 13-16 in the closed position of the panel members.

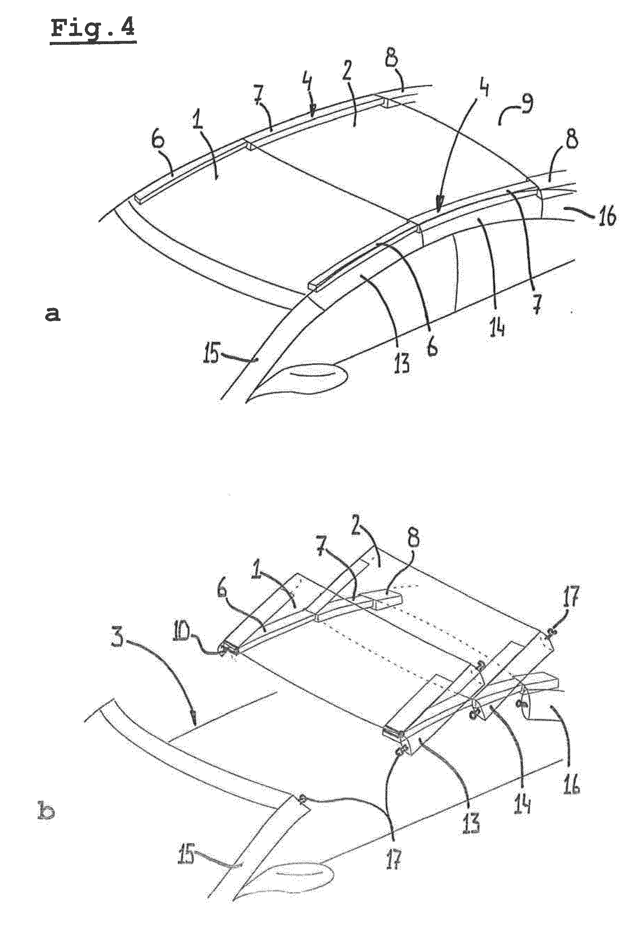

Figure 4 shows a fourth embodiment which closely resembles the embodiment according to figure 3 and in which like parts are indicated by like reference numbers. The only difference with the previous embodiment is that this second embodiment again comprises two telescoping mechanisms 4 located substantially at the opposite longitudinal edges of the roof panels 1,2.

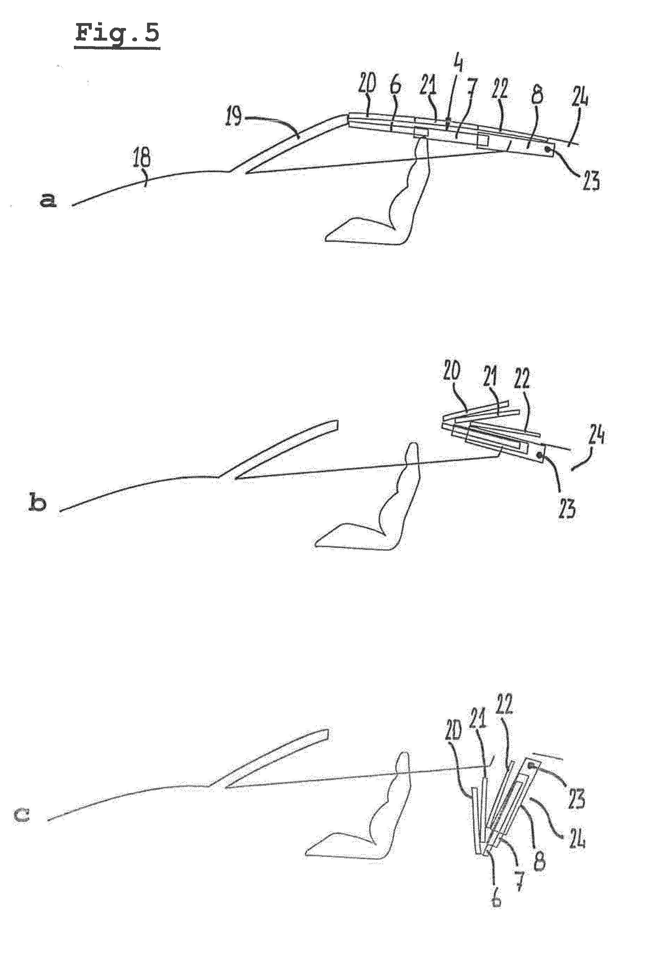

Next, reference is made to figure 5 illustrating a fifth embodiment of the open roof construction in accordance with the present invention. In a schematic side elevational view part of the vehicle body 18 is illustrated with a wind shield area 19 and a trunk area 24. A telescoping mechanism 4 with telescoping members 6-8 and roof panels 20-22 attached thereto is provided. In a closed position (figure 5a) the leading roof panel 20 substantially abuts the wind shield area 19.

It is noted that the embodiment according to figure 5 also may comprise two telescoping mechanisms 4 located substantially at the opposite longitudinal edges of said roof panels 20-22.

Whereas in the embodiments of the open roof construction according to figures 1-4, each telescoping mechanism 4 moves in a fixed direction, in the present embodiment each telescoping mechanism 4 can move in a variable direction. As represented schematically, each telescoping mechanism 4 is mounted for a rotation about an axis of rotation 23 extending substantially in a transverse direction (of the vehicle).

In the illustrated embodiment of the open roof construction the telescoping mechanism 4 is devised for firstly carrying out its translating telescoping movement (from figure 5a to figure 5b) and next its rotation about said axis of rotation 23 (from figure 5b to figure 5c).

It is conceivable, however, that the telescoping mechanism 4 is devised for carrying out its telescoping movement and its rotation about said axis of rotation 23 at least partly simultaneously (and synchronised) or in any other order or combination of movements.

In the embodiment of the open roof construction according to figure 5, the telescoping mechanism 4 is devised for, in their fully opened position, positioning the roof panels 20-22 in a trunk being part of the trunk area 24.

In accordance with some aspects of the previous embodiments, the open roof construction according to the embodiment illustrated in figure 5 may comprise a roof opening with two opposite longitudinal edges which are defined by cant rails (not illustrated here) which are devised for maintaining their position along said longitudinal edges when the panels 20-22 move between the closed and opened positions or which are devised for moving along with the panels when these move between the closed and opened positions. In the latter case such cant rails again may comprise a number of cant rail members (not illustrated here) attached to longitudinal side edges of respective ones of the roof panels 20-22, which cant rail members then may be provided with cooperating connecting members for establishing a connection between successive cant rail members in the closed position of the roof panels.

In the embodiment according to figure 5 the roof panels 20-22 are attached to the respective telescoping members 6-8 in a manner to allow a change of the relative position between a roof panel and the corresponding telescoping member, for example through an axis of rotation (not illustrated here) extending substantially in a transverse direction.

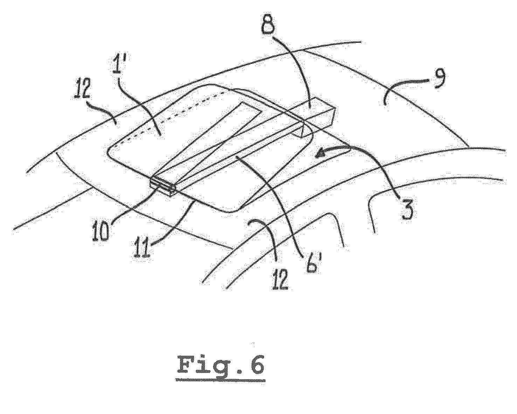

Finally, figure 6 shows an embodiment of the open roof construction according to the invention in a situation similar to figure 16. In this case, however, only one roof panel 1' attached to a telescoping member 6' is provided.

The invention is not limited to the embodiments described before which may be varied widely within the scope of the invention as defined by the appending claims.

## Claims

1. Open roof construction for a vehicle, comprising a number of separate roof panels (1,2:20-22) which are movable between a closed position for closing a roof opening (3) of said vehicle and an opened position for at least partially freeing said roof opening, **characterized in that** a telescoping mechanism (4) is provided for moving said number of roof panels (1,2;20-22), substantially in a longitudinal direction of the vehicle, between the closed and opened positions, which telescoping mechanism (4) is provided with a number of telescoping members (6-8) which in a telescoping manner are movable relative to each other and wherein each panel (1,2;20-22) is attached to and moved by a different one of said telescoping members (6-8).

2. Open roof construction according to claim 1, provided with a single telescoping mechanism (4) located substantially along a longitudinal centre line of said roof panels (1,2;20-22).

3. Open roof construction according to claim 1, provided with two telescoping mechanisms (4) located substantially at the opposite longitudinal edges of said roof panels (1,2;20-22).

4. Open roof construction according to any of the previous claims, wherein each telescoping mechanism (4) moves in a fixed direction with respect to the vehicle when mounted.

5. Open roof construction according to any of the claims 1-3, wherein each telescoping mechanism (4) moves in a variable direction with respect to the vehicle when mounted.

6. Open roof construction according to claim 5, wherein each telescoping mechanism (4) is mounted for a rotation about an axis of rotation (23) extending substantially in a transverse direction of the vehicle.

7. Open roof construction according to claim 6, wherein the telescoping mechanism (4) is devised for carrying out its telescoping movement and its rotation about said axis of rotation (23) substantially successively.

8. Open roof construction according to claim 6, wherein the telescoping mechanism (4) is devised for carrying out its telescoping movement and its rotation about said axis of rotation (23) at least partly simultaneously.

9. Open roof construction according to any of the previous claims, wherein each telescoping mechanism (4) is attachable to the vehicle at a position behind the roof opening (3), as seen in the longitudinal direction of said vehicle, such that the panels (1,2:20-22), when moved to the fully opened position, are located substantially behind said roof opening.

10. Open roof construction according to any of the previous claims for a vehicle of the type having a rear trunk (24), wherein the telescoping mechanism (4) is devised for positioning the panels (1,2;20-22) in their fully opened position in said trunk.

11. Open roof construction according to any of the previous claims, wherein the roof opening (3) is of the type comprising two opposite longitudinal edges which are defined by cant rails (12) which are devised for maintaining their position along said longitudinal edges when the panels (1,2;20-22) move between the closed and opened positions.

12. Open roof construction according to any of the claims 1-10, comprising cant rails (12') attached to longitudinal side edges of the panels and moving along with the panels (1,2;20-22) when these move between the closed and opened positions.

13. Open roof construction according to claim 12, wherein each cant rail (12') comprises a number of cant rail members (13,14) attached to longitudinal side edges of respective ones of the roof panels (1,2;20-22), which cant rail members are provided with cooperating connecting members (17) for, in the closed position of the roof panels (1,2;20-22), establishing a connection between successive cant rail members (13-16).

14. Open roof construction according to any of the previous claims, wherein the roof panels (1,2;20-22) are attached to the respective telescoping members (6-8) in a manner to allow a change of the relative position between a roof panel and the corresponding telescoping member.

15. Open roof construction according to claim 14, wherein each roof panel (1,2;20-22) is attached to a respective telescoping member (6-8) through an axis of rotation (10) extending substantially in a transverse direction of the vehicle.

## Patentansprüche

1. Offendachkonstruktion für ein Fahrzeug, aufweisend eine Anzahl von separaten Dachpaneelen (1, 2; 20-22), welche zwischen einer geschlossenen Position zum Schließen einer Dachöffnung (3) des Fahrzeugs und einer offenen Position zum wenigstens teilweisen Freigeben der Dachöffnung bewegbar sind, **dadurch gekennzeichnet, dass** ein Teleskopmechanismus (4) bereitgestellt ist zum Bewegen der Anzahl von Dachpaneelen (1, 2; 20-22) im Wesentlichen in einer Längsrichtung des Fahrzeugs zwischen der geschlossenen und der offenen Position, welcher Teleskopmechanismus (4) mit einer Anzahl von Teleskopelementen (6-8) ausgestattet ist, welche in einer teleskopischen Weise relativ zueinander bewegbar sind, und wobei jedes Paneel (1, 2; 20-22) angebracht ist an und bewegt ist von einem anderen der Teleskopelemente (6-8).

2. Offendachkonstruktion gemäß Anspruch 1, versehen mit einem einzigen Teleskopmechanismus (4), der im Wesentlichen entlang einer Längsmittellinie der Dachpaneele (1, 2; 20-22) angeordnet ist.

3. Offendachkonstruktion gemäß Anspruch 1, versehen mit zwei Teleskopmechanismen (4), die im Wesentlichen an gegenüberliegenden Längsrändern der Dachpaneele (1, 2; 20-22) angeordnet sind.

4. Offendachkonstruktion gemäß irgendeinem der vorhergehenden Ansprüche, wobei jeder Teleskopmechanismus (4), wenn montiert, sich in einer festen Richtung bezüglich des Fahrzeugs bewegt.

5. Offendachkonstruktion gemäß irgendeinem der Ansprüche 1-3, wobei jeder Teleskopmechanismus (4), wenn montiert, sich in einer variablen Richtung bezüglich des Fahrzeugs bewegt.

6. Offendachkonstruktion gemäß Anspruch 5, wobei jeder Teleskopmechanismus (4) montiert ist für eine Rotation um eine Rotationsachse (23), welche sich im Wesentlichen in eine Querrichtung des Fahrzeugs erstreckt.

7. Offendachkonstruktion gemäß Anspruch 6, wobei der Teleskopmechanismus (4) konstruiert ist zum im Wesentlichen sukzessiven Durchführen seiner teleskopischen Bewegung und seiner Rotation um die Rotationsachse (23).

8. Offendachkonstruktion gemäß Anspruch 6, wobei der Teleskopmechanismus (4) konstruiert ist zum wenigstens teilweisen simultanen Durchführen seiner teleskopischen Bewegung und seiner Rotation um die Rotationsachse (23).

9. Offendachkonstruktion gemäß irgendeinem der vorhergehenden Ansprüche, wobei jeder Teleskopmechanismus (4) an dem Fahrzeug an einer Position, in der Längsrichtung des Fahrzeugs gesehen, hinter der Dachöffnung (3) anbringbar ist, sodass die Paneele (1, 2; 20-22), wenn in die voll geöffnete Position bewegt, im Wesentlichen hinter der Dachöffnung angeordnet sind.

10. Offendachkonstruktion gemäß irgendeinem der vorhergehenden Ansprüche für ein Fahrzeug des Typs, welcher einen hinteren Kofferraum (24) hat, wobei der Teleskopmechanismus (4) konstruiert ist zum Positionieren der Paneele (1, 2; 20-22) in deren voll geöffneten Position im Kofferraum.

11. Offendachkonstruktion gemäß irgendeinem der vorhergehenden Ansprüche, wobei die Dachöffnung (3) des Typs ist, der aufweist zwei gegenüberliegende Längsränder, welche von Abkantleisten (12) definiert sind, welche konstruiert sind zum Aufrechterhalten ihrer Position entlang der Längsränder, wenn die Paneele (1, 2; 20-22) sich zwischen der geschlossenen und der offenen Position bewegen.

12. Offendachkonstruktion gemäß irgendeinem der Ansprüche 1-10, aufweisend Abkantleisten (12'), die an den Längsseitenrändern der Paneele angebracht sind und sich zusammen mit den Paneelen (1, 2; 20-22) bewegen, wenn sich diese zwischen der geschlossenen und der offenen Position bewegen.

13. Offendachkonstruktion gemäß Anspruch 12, wobei jede Abkantleiste (12') eine Anzahl von Abkantleistenelementen (13, 14) aufweist, die an Längsseitenrändern von jeweiligen der Dachpaneele (1, 2; 20-22) angebracht sind, welche Abkantleistenelemente versehen sind mit kooperierenden Verbindungselementen (17) zum, in der geschlossenen Position der Dachpaneele (1, 2; 20-22), Einrichten einer Verbindung zwischen aufeinanderfolgenden Abkantleistenelementen (13-16).

14. Offendachkonstruktion gemäß irgendeinem der vorhergehenden Ansprüche, wobei die Dachpaneele (1, 2; 20-22) an jeweiligen Teleskopelementen (6-8) angebracht sind in einer Weise, um eine Änderung der relativen Position zwischen einem Dachpaneel und dem korrespondierenden Teleskopelement zu erlauben.

15. Offendachkonstruktion gemäß Anspruch 14, wobei jedes Dachpaneel (1, 2; 20-22) an einem jeweiligen Teleskopelement (6-8) angebracht ist durch eine Rotationsachse (10), die sich im Wesentlichen in einer Querrichtung des Fahrzeugs erstreckt.

## Revendications

1. Construction de toit ouvrant pour un véhicule, comprenant un certain nombre de panneaux de toit séparés (1, 2 ; 20 à 22) qui sont mobiles entre une position fermée pour fermer une ouverture de toit (3) dudit véhicule et une position ouverte pour libérer au moins partiellement ladite ouverture de toit, **caractérisée en ce qu'**un mécanisme télescopique (4) est fourni pour déplacer ledit certain nombre de panneaux de toit (1, 2 ; 20 à 22), sensiblement dans une direction longitudinale du véhicule, entre les positions fermée et ouverte, lequel mécanisme télescopique (4) est pourvu d'un certain nombre d'organes télescopiques (6 à 8) qui, de manière télescopique, sont mobiles les uns par rapport autres et dans laquelle chaque panneau (1, 2 ; 20 à 22) est fixé à un organe différent desdits organes télescopiques (6 à 8) et déplacé par celui-ci.

2. Construction de toit ouvrant selon la revendication 1, pourvue d'un seul mécanisme télescopique (4) situé sensiblement le long d'une ligne centrale longitudinale desdits panneaux de toit (1, 2 ; 20 à 22).

3. Construction de toit ouvrant selon la revendication 1, pourvue de deux mécanismes télescopiques (4) situés sensiblement à des bords longitudinaux opposés desdits panneaux de toit (1, 2 ; 20 à 22).

4. Construction de toit ouvrant selon l'une quelconque des revendications précédentes, dans laquelle chaque mécanisme télescopique (4) se déplace dans une direction fixe par rapport au véhicule lorsqu'il est monté.

5. Construction de toit ouvrant selon l'une quelconque des revendications 1 à 3, dans laquelle chaque mécanisme télescopique (4) se déplace dans une direction variable par rapport au véhicule lorsqu'il est monté.

6. Construction de toit ouvrant selon la revendication 5, dans laquelle chaque mécanisme télescopique (4) est monté pour une rotation autour d'un axe de rotation (23) s'étendant sensiblement dans une direction transversale du véhicule.

7. Construction de toit ouvrant selon la revendication 6, dans laquelle le mécanisme télescopique (4) est conçu pour réaliser son mouvement télescopique et sa rotation autour dudit axe de rotation (23) de façon sensiblement successive.

8. Construction de toit ouvrant selon la revendication 6, dans laquelle le mécanisme télescopique (4) est conçu pour réaliser son mouvement télescopique et sa rotation autour dudit axe de rotation (23) de façon au moins partiellement simultanée.

9. Construction de toit ouvrant selon l'une quelconque des revendications précédentes, dans laquelle chaque mécanisme télescopique (4) est fixable au véhicule en une position derrière l'ouverture de toit (3), vu dans la direction longitudinale dudit véhicule, de sorte que les panneaux (1, 2 ; 20 à 22), lorsqu'ils sont déplacés jusqu'à la position totalement ouverte, soient situés sensiblement derrière ladite ouverture de toit.

10. Construction de toit ouvrant selon l'une quelconque des revendications précédentes pour un véhicule du type ayant un coffre arrière (24) dans laquelle le mécanisme télescopique (4) est conçu pour positionner les panneaux (1, 2 ; 20 à 22) dans leur position totalement ouverte dans ledit coffre.

11. Construction de toit ouvrant selon l'une quelconque des revendications précédentes, dans laquelle l'ouverture de toit (3) est du type comprenant deux bords longitudinaux opposés qui sont définis par des brancards (12) qui sont conçus pour maintenir leur position le long desdits bords longitudinaux lorsque les panneaux (1, 2 ; 20 à 22) se déplacent entre les positions fermée et ouverte.

12. Construction de toit ouvrant selon l'une quelconque des revendications 1 à 10, comprenant des brancards (12') fixés à des bords latéraux longitudinaux des panneaux et se déplaçant conjointement avec les panneaux (1, 2 ; 20 à 22) lorsque ceux-ci se déplacent entre les positions fermée et ouverte.

13. Construction de toit ouvrant selon la revendication 12, dans laquelle chaque brancard (12') comprend un certain nombre d'organes de brancard (13, 14) fixés à des bords latéraux longitudinaux de panneaux respectifs des panneaux de toit (1, 2 ; 20 à 22), lesquels organes de brancard sont pourvus d'organes de raccordement coopérants (17) pour, dans la position fermée des panneaux de toit (1, 2 ; 20 à 22), établir un raccordement entre des organes de brancard successifs (13 à 16).

14. Construction de toit ouvrant selon l'une quelconque des revendications précédentes, dans laquelle les panneaux de toit (1, 2 ; 20 à 22) sont fixés aux organes télescopiques respectifs (6 à 8) pour permettre un changement de la position relative entre un panneau de toit et l'organe télescopique correspondant.

15. Construction de toit ouvrant selon la revendication 14, dans laquelle chaque panneau de toit (1, 2 ; 20 à 22) est fixé à un organe télescopique respectif (6 à 8) par l'intermédiaire d'un axe de rotation (10) s'étendant sensiblement dans une direction transversale du véhicule.
